# EUROPÄISCHE PATENTSCHRIFT

(11) **EP 2 429 841 B1**
(45) Veröffentlichungstag und Bekanntmachung des Hinweises auf die Patenterteilung: **12.06.2013**
(21) Anmeldenummer: 10713125.2
(22) Anmeldetag: 27.03.2010
(51) Int. Cl.: B60G 17/018, B60G 17/08

(54) **VORRICHTUNG UND VERFAHREN ZUM GEREGELTEN BEDÄMPFEN EINES FAHRZEUGS**
DEVICE AND METHOD FOR CONTROLLED DAMPING OF A VEHICLE
DISPOSITIF ET PROCÉDÉ PERMETTANT L'AMORTISSEMENT RÉGULÉ D'UN VÉHICULE

(30) Priorität: 16.05.2009 DE 102009021671
(43) Veröffentlichungstag der Anmeldung: 21.03.2012
(73) Patentinhaber: Bayerische Motoren Werke Aktiengesellschaft, 80809 München (DE)
(72) Erfinder: PRÖMM, Uwe, 80686 München (DE); MESKE, Alexander, 85737 Ismaning (DE); FRÖHLICH, Martin, 85375 Neufahrn (DE)
(86) Internationale Anmeldenummer: PCT/EP2010/001943
(87) Internationale Veröffentlichungsnummer: WO 2010/133275

(56) Entgegenhaltungen:
- EP-B1- 0 237 919
- DE-A1- 4 039 839
- DE-A1- 4 212 852
- DE-A1- 4 436 441
- DE-A1- 10 033 770
- DE-A1- 19 922 745
- JP-A- 2 081 710
- JP-A- 5 050 822
- US-B1- 6 285 935

## Beschreibung

Der Erfindung liegen eine Vorrichtung und ein Verfahren zum geregelten Bedämpfen der Aufbau- sowie Radbewegung eines Fahrzeugs in Abhängigkeit von dessen fahrdynamischer Situation zugrunde. Dabei soll es insbesondere einem Fahrer des Fahrzeugs durch eine Vorauswahl unterschiedlicher Komfort- bzw. Dämpfungsmodi möglich sein, dass das Fahrzeug beispielsweise im Modus "Komfort" eine weiche, komfortable Dämpfung der Karosserie gegenüber den Fahrzeugrädern aufweist, während bei einer "Standard"-Einstellung eine normale Dämpfung vorliegt und bei einem Modus "Sport" eine harte bis extrem harte Dämpfung bereitgestellt wird. Die unterschiedliche Dämpfung wird insbesondere mittels gesteuerter Verstelldämpfersysteme durchgeführt, die zwischen Karosserie und den Rädern angeordnet sind. Eine derartige Regelung der Bedämpfung eines Fahrzeugs in Abhängigkeit unterschiedlicher vorgewählter Komfortmodi ist aus DE 100 33 770 A1 bekannt. Ferner wird auf die DE 42 12 852 A1 verwiesen, die ein Radaufhängungssystem eines Kraftfahrzeugs mit in Abhängigkeit von der fahrdynamischen Situation und vom Beladungszustand des Fahrzeugs geregelter Bedämpfung beschreibt.

Derartige Systeme verändern insbesondere je nach Fahrsituation des Fahrzeugs die Bedämpfung und schaffen damit ein besonders hohes Komfortniveau bei gleichzeitiger Wahrung einer hohen Fahrdynamik. Bei den einfacheren bekannten Vorrichtungen zur gesteuerten Veränderung der Bedämpfung eines Fahrzeugs wird mit nur einem festen Parametersatz gearbeitet, der alle fahrdynamischen Situationen abdeckt.

Die sehr hohe Komfortausprägung kann dann insbesondere bei mit Stahlfedern gefederten Fahrzeugen in Verbindung mit hoher Beladung dazu führen, dass es zu einem "Durchschlagen" der Räder kommt. Dies bedeutet, dass die Bedämpfung nicht ausreicht, stattdessen der gesamte Federweg beansprucht wird und die Radaufhängung hart gegen die Karosserie anschlägt. Dies ist zum einen von den Fahrzeuginsassen spürbar sowie hörbar und führt zu einer deutlichen Komfortminderung. Zum andern kann das Durchschlagen auch zu Schäden an den beteiligten Bauteilen führen.

Diesem Problem kann abgeholfen werden, wenn neben der fahrdynamischen Situation als solcher zusätzlich die Beladung des Fahrzeugs bei der Einstellung bzw. Regelung der Bedämpfung berücksichtigt wird. In diesem Sinne ist in der eingangs bereits genannten DE 42 12 852 A1 ein Radaufhängungssystem eines Fahrzeugs beschrieben, bei welchem sog. Dämpfkraftkennwerte um mehrere Schritte von einer weichen zu einer harten Einstellung verändert werden, wenn die Nutzlast des Fahrzeugs einen vorgegebenen Wert überschreitet. Diese grundsätzlich bekannte Vorgehensweise kann jedoch nicht einfach für bestehende Regelkonzepte mit in Abhängigkeit von der fahrdynamischen Situation veränderlicher Bedämpfung übernommen werden, da dies eine signifikante Beschränkung der erwünschtermaßen möglichst fein auf unterschiedliche fahrdynamische Situationen angepassten veränderlichen Bedämpfung zur Folge hätte.

Der Erfindung liegt daher die Aufgabe zugrunde eine Vorrichtung und ein Verfahren zur geregelten bzw. gesteuerten Bedämpfung eines Fahrzeugs nach dem Oberbegriff des Anspruchs 1 bzw. 5 zu schaffen, bei denen auch bei hoher bzw. unterschiedlicher Beladung des Fahrzeugs eine komfortable Bedämpfung in allen fahrdynamischen Zuständen auf günstige Weise gewährleistet ist.

Die Aufgabe ist erfindungsgemäß mit einer Vorrichtung gemäß Anspruch 1 und einem Verfahren gemäß Anspruch 5 gelöst. Vorteilhafte Weiterbildungen der Erfindung sind in den abhängigen Ansprüchen beschrieben.

Vorliegend ist eine Vorrichtung zum geregelten Bedämpfen eines Fahrzeugs geschaffen, mit einem Mittel zum Speichern eines Satzes Reglerparameter R1 bis Rn zum Regeln der Bedämpfung des unbeladenen Fahrzeugs in Abhängigkeit von dessen fahrdynamischer Situation 1 bis n (wobei n eine natürliche Zahl größer 1 ist), einem Mittel zum Erkennen eines Beladungszustandes b des Fahrzeugs, einem Mittel zum Adaptieren des Satzes Reglerparameter R1 bis Rn in Abhängigkeit des erkannten Beladungszustandes b zu einem Satz Reglerparameter R1 b bis Rnb und einem Mittel zum Bedämpfen des Fahrzeugs in Abhängigkeit des Satzes Reglerparameter R1 b bis Rnb in Abhängigkeit von dessen fahrdynamischer Situation 1 bis n.

Es wurde erkannt, dass grundsätzlich bei der Bedämpfung eines Fahrzeugs eine sehr große Anzahl möglicher Einflussfaktoren berücksichtigt werden müsste. Solche Einflussfaktoren sind neben der eigentlichen fahrdynamischen Situation beispielsweise eine nicht dem Untergrund angemessene Fahrgeschwindigkeit, der Winddruck am Fahrzeug, unterschiedliche Reifendrücke, das Lenkverhalten des Fahrers und vieles mehr. All diese Faktoren zu berücksichtigen wäre zwar technisch grundsätzlich machbar, würde aber im Hinblick auf die Kosten nicht zu einem marktfähigen Produkt führen. Erfindungsgemäß ist demgegenüber gezielt der Beladungszustand des Fahrzeugs als einziger weiterer Faktor ausgewählt worden, der neben der fahrdynamischen Situation für die Bedämpfung des Fahrzeugs berücksichtigt wird. Auf diese Weise wird mit der erfindungsgemäßen Lösung eine kostengünstige und zugleich erheblich komfortablere Bedämpfung geschaffen. Die Erfindung nutzt dabei zusätzlich die Technik von und die Erfahrung mit bestehenden Systemen, indem von einem derzeit verwendeten Satz Reglerparameter R1 bis Rn für das unbeladene Fahrzeug ausgegangen wird und dieser Satz Reglerparameter lediglich in Richtung auf einen erkannten Beladungszustand des Fahrzeugs abgeändert wird. Auch zum Erkennen des Beladungszustands kann vorteilhaft auf bestehende Systeme am Fahrzeug zurückgegriffen werden. Vorteilhaft werden dabei insbesondere bei stahlgefederten Fahrzeugen Höhenstandssensoren und bei luftgefederten Fahrzeugen Drucksensoren abgefragt, oder es wird eine Kombination solcher Messsignale ausgewertet. Vorteil ist, dass zumindest die Höhenstandssensoren in den betreffenden Fahrzeugen in der Regel zur Standardausstattung gehören, so dass keine zusätzlichen Kosten entstehen.

Bei einer ersten Ausführungsform der erfindungsgemäßen Vorrichtung ist das Mittel zum Speichern dazu angepasst, mindestens zwei Sätze Reglerparameter R1ₖ₁ bis Rnₖ₁ und R1ₖ₂ bis Rnₖ₂ für unterschiedliche Komfortmodi k1, k2 des unbeladenen Fahrzeugs zu speichern, und dazu angepasst, zu jedem Satz einen Satz Reglerparameter R1Bₖ₁ bis RnBₖ₁ und R1Bₖ₂ bis RnBₖ₂ für das vollbeladene Fahrzeug zu speichern, und das Mittel zum Adaptieren ist dazu angepasst, den Satz Reglerparameter R1 b bis Rnb anhand einer Auswahl des Komfortmodus und einer mathematischen Interpolation zwischen dem damit ausgewählten Satz Reglerparameter für das unbeladene Fahrzeug und dem zugehörigen Satz Reglerparameter für das vollbeladene Fahrzeug zu ermitteln.

Mit dieser ersten Ausführungsform ist eine funktionsoptimale Lösung geschaffen, die allerdings hinsichtlich der Bedatung, also der Speicherung und Verarbeitung der hinterlegten Daten, noch vergleichsweise aufwendig ist. Die Sätze an Reglerparametern werden bei diesem Vorgehen verdoppelt, wobei ein Parametersatz für den unbeladenen und ein Parametersatz für den beladenen Fahrzeugzustand vorgesehen ist. Der Parametersatz, der für die eigentliche Regelung verwendet wird, wird aus diesen beiden Sätzen unter Berücksichtigung des aktuellen Beladungszustands berechnet. Es entfällt damit ein sonst viel aufwändigeres Speichern von zwischengeordneten Datensätzen. Als Berechnungsmethode wird insbesondere eine einstellbare, stückweise lineare Interpolation verwendet.

Bei einer zweiten Ausführungsform der erfindungsgemäßen Vorrichtung ist das Mittel zum Speichern dazu angepasst, mindestens zwei Sätze Reglerparameter R1ₖ₁ bis Rnₖ₁ und R1ₖ₂ bis Rnₖ₂ für unterschiedliche Komfortmodi k1, k2 des unbeladenen Fahrzeugs zu speichern, und dazu angepasst, einen einzigen Satz Reglerparameter R1B bis RnB für das vollbeladene Fahrzeug zu speichern, und das Mittel zum Adaptieren ist dazu angepasst, den Satz Reglerparameter R1 b bis Rnb anhand einer Auswahl des Komfortmodus und einer mathematischen Interpolation zwischen dem damit ausgewählten Satz Reglerparameter für das unbeladene Fahrzeug und dem einzigen Satz Reglerparameter für das vollbeladene Fahrzeug zu ermitteln.

Mit dieser zweiten Ausführungsform kann der benötigte Speicherplatz weiter verringert werden. Ferner kann das zugehörige Bedämpfungssystem leichter auf den nur einen Parametersatz für den vollbeladenen Zustand abgestimmt werden. Eine Abstimmung auf drei unterschiedliche Modi für den vollbeladenen Zustand entfällt hingegen. Es werden mit dieser Ausführungsform aber dennoch die Anforderungen einer "Verhinderung von Durchschlagen" und einer "Erhöhung des Fahrkomforts" erfüllt. Ein niedriger Applikationsaufwand und eine speicherplatzschonende Darstellung rechtfertigen die sich gegebenenfalls ergebenden Kompromisse hinsichtlich des erzielten Fahrkomforts.

Zur weiteren Reduzierung des benötigten Speicherplatzes ist bei der erfindungsgemäßen Vorrichtung ferner vorteilhaft das Mittel zum Speichern dazu angepasst, mindestens zwei Sätze Reglerparameter R1ₖ₁ bis Rnₖ₁ und R1ₖ₂ bis Rnₖ₂ für unterschiedliche Komfortmodi k1, k2 des unbeladenen Fahrzeugs zu speichern, von denen ein Satz für eine maximal harte Dämpfung des Fahrzeugs ausgelegt ist, und das Mittel zum Adaptieren ist dazu angepasst, den Satz Reglerparameter R1 b bis Rnb anhand einer Auswahl des Komfortmodus und einer mathematischen Interpolation zwischen dem damit ausgewählten Satz Reglerparameter für das unbeladene Fahrzeug und dem Satz Reglerparameter für die maximal harte Dämpfung des Fahrzeugs zu ermitteln.

Diese Weiterbildung basiert auf dem Umstand, dass bei relevanten Fahrzeugen unter dem Modus "Sport" eine maximal harte Dämpfung ausgelegt wird, bei der es möglichst nicht zu einem "Durchschlagen" auch bei vollbeladenem Fahrzeug kommt. Diese Art der Auslegung der maximal harten Dämpfung wird nun erfindungsgemäß als maximaler Parametersatz auch für die übrigen Komfortmodi, wie "Komfort" und "Standard" im Hinblick auf ein unter diesen Modi vollbeladenes Fahrzeug genutzt. Es ist dadurch im Speicher kein eigens erzeugter Parametersatz für den Zustand "vollbeladenes Fahrzeug" erforderlich.

Bei einer vorteilhaften Weiterbildung der erfindungsgemäßen Vorrichtung ist mit jedem Satz Reglerparameter für das vollbeladene Fahrzeug eine verstärkte Grundbedämpfung des Fahrzeugs berücksichtigt.

Diese Weiterbildung basiert auf einer Herleitung aus der physikalischen Wirkkette bei einer Zunahme der Beladung eines Fahrzeugs. Durch die Zuladung ergibt sich eine Schwerpunktsverschiebung und eine Massezunahme, auf die erfindungsgemäß wie oben erläutert reagiert wird.

Bei einer weiteren vorteilhaften Weiterbildung der erfindungsgemäßen Vorrichtung ist mit jedem Satz Reglerparameter für das vollbeladene Fahrzeug ein verstärktes Bedämpfen gegen Huben, Nicken und/oder Wanken des Fahrzeugs berücksichtigt.

Die derartige Anpassung der Reglerparameter wirkt insbesondere der Massezunahme am Fahrzeug bei dessen Beladung entgegen.

Bei einer weiteren vorteilhaften Weiterbildung der erfindungsgemäßen Vorrichtung ist mit jedem Satz Reglerparameter für das vollbeladene Fahrzeug ein verstärktes Bedämpfen des Hecks des Fahrzeugs berücksichtigt.

Diese Weiterbildung beruht auf der Erkenntnis, dass mit einer Zuladung bei bekannten Fahrzeugen deren Schwerpunkt in der Regel nach hinten verlagert wird und sich damit auch die Verteilung des Gewichts auf Vorder- und Hinterachse verändert.

Die Aufgabe ist ferner erfindungsgemäß entsprechend mit einem Verfahren zum geregelten Bedämpfen eines Fahrzeugs mit den im Anspruch 5 angegebenen Schritten gelöst. Auch für diesen Verfahrensanspruch 5 bestehen die für den Vorrichtungsanspruch 1 erläuterten Weiterbildungen analog.

Mit der erfindungsgemäßen Lösung und deren Weiterbildungen kann ein "Durchschlagen" der Räder unter allen Betriebszuständen eines Fahrzeugs verhindert oder zumindest abgeschwächt werden. Der Schwingkomfort wird auf kostengünstige Weise insbesondere bei Fahrzeugen ohne Niveauregulierung erheblich erhöht. Schädigungen von Bauteilen, wie Achsen, Federn, Dämpfern sowie deren Anbindung an die Karosserie, können reduziert werden. Die Lebensdauer derartiger Bauteile wird dadurch verlängert. Schließlich können auch insgesamt die Herstellungskosten zugehöriger Achssysteme reduziert werden, da die Bauteile so konstruiert werden können, dass ein niedrigeres Lastkollektiv eingehalten wird.

Nachfolgend werden Ausführungsbeispiele der erfindungsgemäßen Lösung anhand der beigefügten schematischen Zeichnungen näher erläutert. Es zeigt:
Fig. 1 eine stark schematische Darstellung eines ersten Ausführungsbeispiels einer erfindungsgemäßen Vorrichtung zum geregelten Bedämpfen eines Fahrzeugs,
Fig. 2 eine stark schematische Darstellung eines zweiten Ausführungsbeispiels einer erfindungsgemäßen Vorrichtung zum geregelten Bedämpfen eines Fahrzeugs,
Fig. 3 eine stark schematische Darstellung eines dritten Ausführungsbeispiels einer erfindungsgemäßen Vorrichtung zum geregelten Bedämpfen eines Fahrzeugs und
Fig. 4 ein Diagramm des Schrittes "Adaptieren des Satzes Reglerparameter R1 b bis Rnb" bei einer der Vorrichtungen gemäß Fig. 1 bis 3.

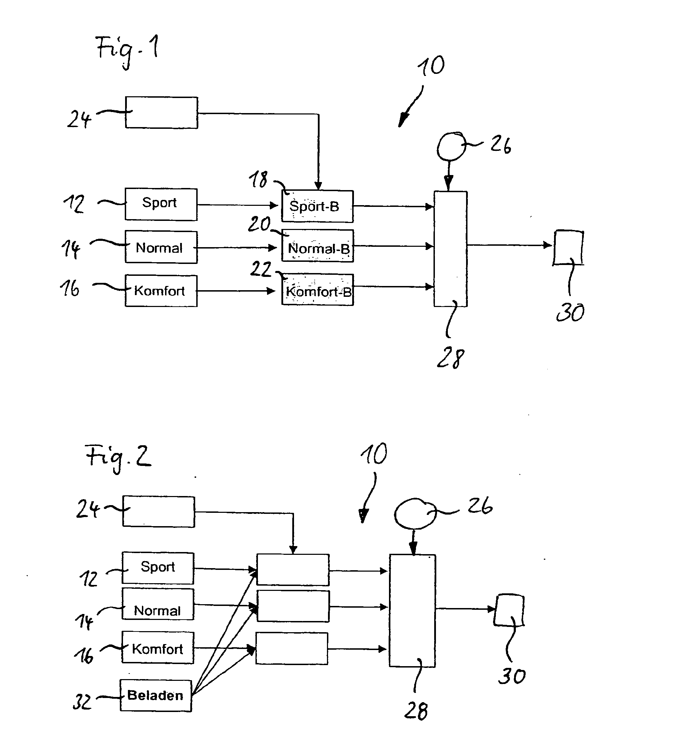

In Fig. 1 ist eine Vorrichtung 10 zum geregelten Bedämpfen eines Fahrzeugs veranschaulicht, bei der in einem Mittel zum Speichern, vorliegend in Gestalt eines Speicherchips innerhalb einer elektronischen Steuerung, ein Satz Reglerparameter 12 mit Parametern R1ₖ₁ bis Rnₖ₁ für einen Komfortmodus k1 bzw. "Sport", ein Satz Reglerparameter 14 mit Parametern R1ₖ₂ bis Rnₖ₂ für einen Komfortmodus k2 bzw. "Normal" sowie ein Satz Reglerparameter 16 mit Parametern R1k₃ bis Rnₖ₃ für einen Komfortmodus k3 bzw. "Komfort" gespeichert sind. Ferner sind in dem Mittel zum Speichern ein Satz Reglerparameter 18 mit Parametern R1Bₖ₁ bis RnBₖ₁ für einen Komfortmodus k1-B bzw. "Sport-B", ein Satz Reglerparameter 20 mit Parametern R1Bₖ₂ bis RnBₖ₂ für eine Komfortmodus k2-B bzw. "Normal-B" sowie ein Satz Reglerparameter 22 mit Parametern R1Bₖ₃ bis RnBₖ₃ für eine Komfortmodus k3-B bzw. "Komfort-B" gespeichert. Die Bezeichnung "B" steht dabei für den vollbeladenen Zustand des Fahrzeugs.

Die Beladung des Fahrzeugs wird an der Vorrichtung 10 mit einem Mittel 24 zum Erkennen des Beladungszustandes des Fahrzeugs festgestellt. Dabei liegt die tatsächliche Beladung b des Fahrzeugs in der Regel unter der maximal zulässigen Beladung B des vollbeladenen Fahrzeugs. Mit dem Mittel 24 wird also der tatsächlich vorherrschende Beladungszustand des Fahrzeugs festgestellt.

Darüber hinaus ist am Fahrzeug ein Vorwahlschalter 26 vorgesehen, mit dem vom Fahrer des Fahrzeugs voreingestellt werden kann, in welchem Komfortmodus er das Fahrzeug bewegen will, also ob er den Komfortmodus "Sport", "Normal" oder "Komfort" wählen möchte, damit das Fahrzeug entsprechend hinsichtlich seines dynamischen Fahrverhaltens sportlich, normal oder verstärkt komfortorientiert gefedert und gedämpft wird.

Die Vorauswahl des Komfortmodus und der Beladungszustand des Fahrzeugs werden an einem Mittel 28 zum Adaptieren des relevanten Satzes Reglerparameter R1 bis Rn berücksichtigt. Dabei wird bei dem Ausführungsbeispiel gemäß Fig. 1 bei Auswahl des Komfortmodus "Sport" eine mathematische Interpolation zwischen dem Satz Reglerparameter 12 und dem zugehörigen Satz Reglerparameter 18 durchgeführt. Bei Auswahl des Komfortmodus "Normal" erfolgt eine mathematische Interpolation zwischen dem Satz Reglerparameter 14 und dem Satz Reglerparameter 20. Wenn der Komfortmodus "Komfort" gewählt ist, wird für den tatsächlichen Belastungszustand b zwischen dem Satz Reglerparameter 16 und dem Satz Reglerparameter 22 mathematisch interpoliert.

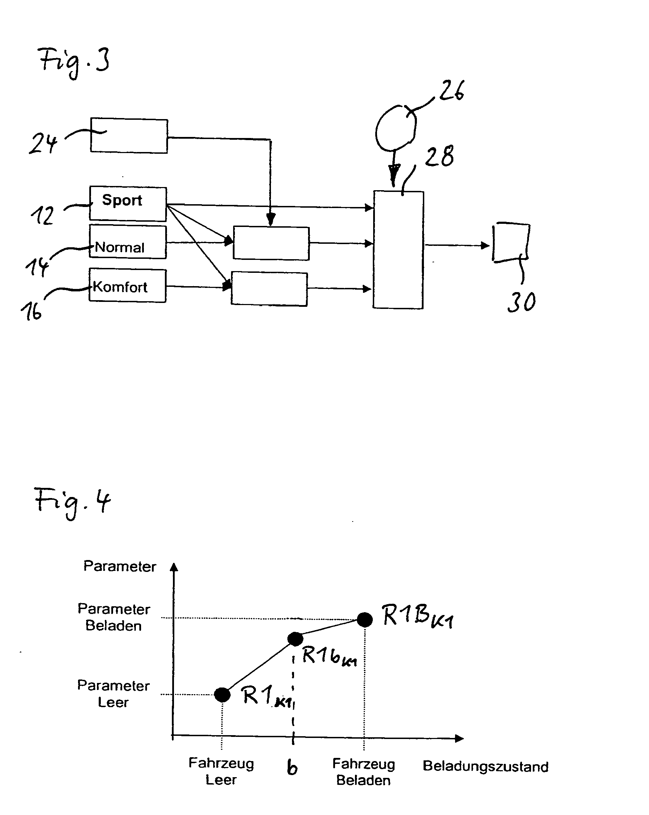

Die Art der mathematischen Interpolation ist in Fig. 4 beispielhaft im Komfortmodus "Sport" für den Parameter R1ₖ₁ hin zum Parameter R1Bₖ₁ (Y-Achse) veranschaulicht. Es ist zu erkennen, dass die Interpolation für den zum relevanten Beladungszustand b ermittelten Parameter R1bₖ₁ nicht zwingend über die gesamte Beladungsänderung (X-Achse) vom Beladungszustand "Leer" zum Beladungszustand "Beladen" bzw. "Vollbeladen" hinweg linear erfolgen muss, sondern dass auch nur abschnittsweise lineare Interpolationen sinnvoll sind.

An einem Mittel 30 gemäß Fig. 1 zum Bedämpfen des Fahrzeugs werden die interpolieren Parameter R1 b bis Rnb schließlich zur eigentlichen Bedämpfung des Fahrzeugs in Abhängigkeit von dessen Beladungszustand b verwendet.

In Fig. 2 ist eine Vorrichtung 10 veranschaulicht, bei der ebenfalls ein Satz Reglerparameter 12 mit Parametern R1ₖ₁ bis Rnₖ₁ für einen Komfortmodus k1 bzw. "Sport", ein Satz Reglerparameter 14 mit Parametern R1ₖ2 bis Rnₖ₂ für einen Komfortmodus k2 bzw. "Normal" sowie ein Satz Reglerparameter 16 mit Parametern R1ₖ₃ bis Rnₖ₃ für einen Komfortmodus k3 bzw. "Komfort" gespeichert sind. Ferner ist nur ein einziger Satz Reglerparameter 32 mit Parametern R1 B bis RnB für einen vollbeladenen Zustand des Fahrzeugs gespeichert. Dieser Satz Parameter 32 wird für alle drei Komfortmodi "Sport", "Normal" und "Komfort" verwendet, wenn mit dem zugehörigen Mittel 28 ein an die jeweilige Beladungssituation b angepasst Satz Reglerparameter R1 b bis Rnb adaptiert wird. Die Adaption erfolgt dabei entsprechend der in Fig. 4 dargestellten Weise, wobei als Parametersatz für den Zustand "Beladen" bzw. "vollbeladen" aber wie erwähnt bei allen Komfortmodi stets der gleich Parametersatz 32 mit den Parametern R1 B bis RnB zur Anwendung kommt.

Die Fig. 3 zeigt ein Ausführungsbeispiel einer Vorrichtung 10, bei der überhaupt kein eigener Parametersatz für den vollbeladenen Zustand des Fahrzeugs gespeichert ist. Stattdessen wird für die oben erläuterten Interpolation in den Komfortmodi "Normal" und "Komfort" als Parametersatz einer maximalen Beladung jener Parametersatz 12 mit den Parametern R1ₖ₁ bis Rnₖ₁ des Komfortmodus k1 bzw. "Sport" verwendet. Im Betriebsmodus "Sport" findet selbst keine beladungsabhängige Anpassung des zugehörigen Parametersatzes statt. Stattdessen wird über die gesamte Spanne der Beladung hinweg stets mit dem einen und einzigen Satz Reglerparameter R1ₖ₁ bis Rnₖ₁ gearbeitet.

## Patentansprüche

1. Vorrichtung (10) zum geregelten Bedämpfen eines Fahrzeugs mit einem Mittel (12, 14, 16) zum Speichern eines Satzes Reglerparameter R1 bis Rn zum Regeln der Bedämpfung des unbeladenen Fahrzeugs in Abhängigkeit von dessen fahrdynamischer Situation 1 bis n, einem Mittel (24) zum Erkennen eines Beladungszustandes b des Fahrzeugs, einem Mittel (28) zum Adaptieren des Satzes Reglerparameter R1 bis Rn in Abhängigkeit des erkannten Beladungszustandes b zu einem Satz Reglerparameter R1 b bis Rnb und einem Mittel (30) zum Bedämpfen des Fahrzeugs in Abhängigkeit des Satzes Reglerparameter R1b bis Rnb in Abhängigkeit von dessen fahrdynamischer Situation 1 bis n,
**dadurch gekennzeichnet, dass** das Mittel (12, 14, 16) zum Speichern dazu angepasst ist, mindestens zwei Sätze Reglerparameter R1ₖ₁ bis Rnₖ₁ und R1ₖ₂ bis Rnₖ₂ für unterschiedliche Komfortmodi k1, k2 des unbeladenen Fahrzeugs zu speichern,
und dazu angepasst ist, entweder zu jedem Satz einen Satz Reglerparameter R1Bₖ₁ bis RnBₖ₁ und R1Bₖ₂ bis RnBₖ₂ für das vollbeladene Fahrzeug oder einen einzigen Satz Reglerparameter R1B bis RnB für das vollbeladene Fahrzeug zu speichern,
und dass weiterhin das Mittel (28) zum Adaptieren dazu angepasst ist, den Satz Reglerparameter R1b bis Rnb anhand einer Auswahl des Komfortmodus und einer mathematischen Interpolation zwischen dem damit ausgewählten Satz Reglerparameter für das unbeladene Fahrzeug und dem zugehörigen oder einzigen Satz Reglerparameter für das vollbeladene Fahrzeug zu ermitteln.

2. Vorrichtung nach Anspruch 1, bei der mit jedem Satz Reglerparameter für das vollbeladene Fahrzeug eine verstärkte Grundbedämpfung des Fahrzeugs berücksichtigt ist.

3. Vorrichtung nach Anspruch 1 oder 2, bei der mit jedem Satz Reglerparameter für das vollbeladene Fahrzeug ein verstärktes Bedämpfen gegen Huben, Nicken und/oder Wanken des Fahrzeugs berücksichtigt ist.

4. Vorrichtung nach einem der vorangegangenen Ansprüche, bei der mit jedem Satz Reglerparameter für das vollbeladene Fahrzeug ein verstärktes Bedämpfen des Hecks des Fahrzeugs berücksichtigt ist.

5. Verfahren zum geregelten Bedämpfen eines Fahrzeugs mit den Schritten Speichern (12, 14, 16) eines Satzes Reglerparameter R1 bis Rn zum Regeln der Bedämpfung des unbeladenen Fahrzeugs in Abhängigkeit von dessen fahrdynamischer Situation 1 bis n, Erkennen (24) eines Beladungszustandes b des Fahrzeugs, Adaptieren (28) des Satzes Reglerparameter R1 bis Rn in Abhängigkeit des erkannten Beladungszustandes b zu einem Satz Reglerparameter R1 b bis Rnb und Bedämpfen (30) des Fahrzeugs in Abhängigkeit des Satzes Reglerparameter R1b bis Rnb in Abhängigkeit von dessen fahrdynamischer Situation 1 bis n,
**dadurch gekennzeichnet, dass** beim Speichern (12, 14, 16) mindestens zwei Sätze Reglerparameter R1ₖ₁ bis Rnₖ₁ und R1ₖ₂ bis Rnₖ₂ für unterschiedliche Komfortmodi k1, k2 des unbeladenen Fahrzeugs und entweder zu jedem Satz ein Satz Reglerparameter R1Bₖ₁ bis RnBₖ₁ und R1Bₖ₂ bis RnBₖ₂ für das vollbeladene Fahrzeug oder ein einziger Satz Reglerparameter R1B bis RnB für das vollbeladene Fahrzeug gespeichert werden,
und dass weiterhin beim Adaptieren (28) der Satz Reglerparameter R1 b bis Rnb anhand einer Auswahl des Komfortmodus und einer mathematischen Interpolation zwischen dem damit ausgewählten Satz Reglerparameter für das unbeladene Fahrzeug und dem zugehörigen oder einzigen Satz Reglerparameter für das vollbeladene Fahrzeug ermittelt wird.

6. Verfahren nach Anspruch 5, bei dem mit jedem Satz Reglerparameter für das vollbeladene Fahrzeug eine verstärkte Grundbedämpfung des Fahrzeugs berücksichtigt wird.

7. Verfahren nach Anspruch 5 oder 6, bei dem mit jedem Satz Reglerparameter für das vollbeladene Fahrzeug ein verstärktes Bedämpfen gegen Huben, Nicken und/oder Wanken des Fahrzeugs berücksichtigt wird.

8. Verfahren nach einem der Ansprüche 5 bis 7, bei dem mit jedem Satz Reglerparameter für das vollbeladene Fahrzeug ein verstärktes Bedämpfen des Hecks des Fahrzeugs berücksichtigt wird.

## Claims

1. A device (10) for the controlled damping of a motor vehicle, comprising a means (12, 14, 16) for storing a set of controller parameters R1 to Rn for controlling the damping of the unloaded vehicle as a function of its dynamic driving situation 1 to n, a means (24) for detecting a loading state b of the vehicle, a means (28) for adapting the set of controller parameters R1 to Rn as a function of the detected loading state b to a set of controller parameters R1 b to Rnb and a means (30) for damping the vehicle as a function of the set of controller parameters R1b to Rnb as a function of its dynamic driving situation 1 to n, **characterised in that** the means (12, 14, 16) for storage is adapted for storing at least two sets of controller parameters R1ₖ₁ to Rnₖ₁ and R1ₖ₂ to Rnₖ₂ for different comfort modes k1, k2 of the unloaded vehicle, and is adapted either to store for each set a set of controller parameters R1Bₖ₁ to RnBₖ₁ and R1Bₖ₂ to RnBₖ₂ for the fully loaded vehicle or a single set of controller parameters R1 B to RnB for the fully loaded vehicle, and **in that**, furthermore, the means (28) for adaptation is adapted to determine the set of controller parameters R1 b to Rnb with the aid of a selection of the comfort mode and a mathematical interpolation between the set selected therewith of controller parameters for the unloaded vehicle and the associated or single set of controller parameters for the fully loaded vehicle.

2. A device according to claim 1, wherein an increased basic damping of the vehicle is taken into account with each set of controller parameters for the fully loaded vehicle.

3. A device according to claim 1 or 2, wherein an increased damping against lifting, pitching and/or rolling of the vehicle is taken into account with each set of controller parameters for the fully loaded vehicle.

4. A device according to any one of the preceding claims, wherein an increased damping of the rear of the vehicle is taken into account with each set of controller parameters for the fully loaded vehicle.

5. A method for the controlled damping of a vehicle, comprising the steps of storing (12, 14, 16) a set of controller parameters R1 to Rn to control the damping of the unloaded vehicle as a function of its dynamic driving situation 1 to n, detecting (24) a loading state b of the vehicle, adapting (28) the set of controller parameters R1 to Rn as a function of the detected loading state b to a set of controller parameters R1 b to Rnb and damping (30) the vehicle as a function of the set of controller parameters R1 b to Rnb depending on its dynamic driving situation 1 to n, **characterised in that** during storage (12, 14, 16) at least two sets of controller parameters R1ₖ₁ to Rnₖ₁ and R1ₖ₂ to Rnₖ₂ are stored for different comfort modes k1, k2 of the unloaded vehicle and for each set, either a set of controller parameters R1Bₖ₁ to RnBₖ₁ and R1Bₖ₂ to RnBₖ₂ is stored for the fully loaded vehicle or a single set of controller parameters R1 B to RnB is stored for the fully loaded vehicle, and **in that**, furthermore, during adaptation (28), the set of controller parameters R1 b to Rnb is determined with the aid of a selection of the comfort mode and a mathematical interpolation between the set selected therewith of controller parameters for the unloaded vehicle and the associated or the single set of controller parameters for the fully loaded vehicle.

6. A method according to claim 5, wherein an increased basic damping of the vehicle is taken into account with each set of controller parameters for the fully loaded vehicle.

7. A method according to claim 5 or 6, wherein an increased damping against lifting, pitching and/or rolling of the vehicle is taken into account with each set of controller parameters for the fully loaded vehicle.

8. A method according to any one of claims 5 to 7, wherein an increased damping of the rear of the vehicle is taken into account with each set of controller parameters for the fully loaded vehicle.

## Revendications

1. Dispositif (10) pour réguler l'amortissement d'un véhicule comportant un moyen (12, 14, 16) pour enregistrer un jeu de paramètres de réglage R1-Rn pour réguler l'amortissement du véhicule non chargé en fonction de sa situation dynamique de roulage (1-n), un moyen (24) pour reconnaître un état de charge b) du véhicule, un moyen (28) pour adapter le jeu de paramètres de réglage R1-Rn en fonction de l'état de charge détecté b) pour un jeu de paramètres de réglage R1b-Rnb et un moyen (30) pour amortir le véhicule en fonction du jeu de paramètres de réglage R1b-Rnb en fonction son état de dynamique de roulage (1-n), dispositif **caractérisé en ce que**
le moyen (12, 14, 16) est adapté pour enregistrer au moins deux jeux de paramètres de réglage R1_{K1}-Rn_{K1} et R1_{K2}-RN_{K2} pour des modes de confort k1, k2 différents du véhicule non chargé, et
pour enregistrer pour chaque jeu, un jeu de paramètres de réglage R1B_{K1}-RnB_{K1} et R1B_{K2}-RnB_{K2} pour le véhicule complètement chargé ou un unique jeu de paramètres de réglage R1B-RnB pour le véhicule complètement chargé, et
le moyen (28) d'adaptation est adapté pour déterminer le jeu de paramètres de réglage R1b-Rnb à l'aide d'un choix du mode de confort et d'une interpolation mathématique entre le jeu de paramètres de réglage sélectionné pour le véhicule non chargé et le jeu de paramètres de réglage correspondant ou unique pour le véhicule complètement chargé.

2. Dispositif selon la revendication 1,
**caractérisé en ce qu'**
on tient compte d'un amortissement de base renforcé du véhicule dans chaque jeu de paramètres de réglage pour le véhicule complètement chargé.

3. Dispositif selon la revendication 1 ou 2,
**caractérisé en ce que**
pour le jeu de paramètres de réglage correspondant au véhicule complètement chargé, on tient compte d'un amortissement renforcé contre le soulèvement, le basculement avant et/ou le tangage du véhicule.

4. Dispositif selon l'une des revendications précédentes,
**caractérisé en ce que**
pour chaque jeu de paramètres de réglage pour le véhicule complètement chargé, on tient compte d'un amortissement amplifié de l'arrière du véhicule.

5. Procédé d'amortissement régulé d'un véhicule comprenant les étapes suivantes :
- enregistrement (12, 14, 16) d'un jeu de paramètres de réglage R1-Rn pour réguler l'amortissement du véhicule non chargé en fonction de son état de dynamique de roulage (1-n),
- détection (24) d'un état de charge b) du véhicule,
- adapter (28) le jeu de paramètres de réglage R1-Rn en fonction de l'état de charge détecté b) pour un jeu de paramètres de réglage R1b-Rnb, et
- amortir (30) le véhicule en fonction du jeu de paramètre de réglage R1b-Rnb pour son état de dynamique de roulage (1-n),
procédé **caractérisé en ce que**
l'enregistrement (12, 14, 16) porte sur au moins deux jeux de paramètres de réglage R1_{K1}-Rn_{K1} et R1_{K2}-Rn_{K2} pour des modes de confort k1, k2 différents du véhicule non chargé et pour chaque jeu, on enregistre un jeu de paramètres de réglage R1B_{K1}-RnB_{K1}-R1B_{K2}-RnB_{K2} pour le véhicule complètement chargé ou l'unique jeu de paramètres de réglage R1b-Rnb pour le véhicule complètement chargé, et
- en outre lors de l'adaptation (28) du jeu de paramètres de réglage R1b-Rnb on choisit à l'aide d'une sélection du mode de confort et d'une interpolation mathématique, entre le jeu de paramètres de réglage ainsi sélectionné pour le véhicule non chargé et le jeu correspondant ou unique de paramètres de réglage pour le véhicule complètement chargé.

6. Procédé selon la revendication 5,
**caractérisé en ce que**
pour chaque jeu de paramètre de réglage pour le véhicule complètement chargé, on tient compte de l'amortissement de base renforcé du véhicule.

7. Dispositif selon la revendication 5 ou 6,
**caractérisé en ce que**
pour chaque jeu de paramètres de réglage pour le véhicule complètement chargé, on tient compte d'un amortissement renforcé contre le soulèvement, le basculement vers l'avant et/ou le tangage du véhicule.

8. Dispositif selon l'une des revendications 5 à 7,
**caractérisé en ce que**
pour chaque jeu de paramètres de réglage pour le véhicule complètement chargé on tient compte d'un amortissement renforcé de l'arrière du véhicule.
